# EUROPÄISCHE PATENTSCHRIFT

(11) **EP 2 171 229 B1**
(45) Veröffentlichungstag und Bekanntmachung des Hinweises auf die Patenterteilung: **06.04.2016**
(21) Anmeldenummer: 08784657.2
(22) Anmeldetag: 09.07.2008
(51) Int. Cl.: F01N 3/20

(54) **VORRICHTUNG ZUM NACHBEHANDELN DER ABGASE VON DIESELMOTOREN**
APPARATUS FOR THE AFTER-TREATMENT OF THE EXHAUST GASES OF DIESEL ENGINES
DISPOSITIF DE RETRAITEMENT DES GAZ D'ÉCHAPPEMENT DE MOTEURS DIESEL

(30) Priorität: 25.07.2007 DE 202007010324 U
(43) Veröffentlichungstag der Anmeldung: 07.04.2010
(73) Patentinhaber: Tenneco GmbH, 67480 Edenkoben (DE)
(72) Erfinder: HAVERKAMP, Sascha, 76751 Jockgrim (DE); LANG, Andreas, 67454 Hassloch (DE); WOLF, Michael, 76863 Herxheim (DE)
(74) Vertreter: Thews, Karl
(86) Internationale Anmeldenummer: PCT/EP2008/005570
(87) Internationale Veröffentlichungsnummer: WO 2009/012885

(56) Entgegenhaltungen:
- EP-A- 1 262 644
- DE-A1- 4 203 807
- DE-A1- 4 417 238
- US-A1- 2005 150 211

## Beschreibung

### Technisches Gebiet:

Die Erfindung betrifft eine Vorrichtung **zum Eindüsen von Harnstoff in** Abgase von Dieselmotoren gemäß dem Oberbegriff des Anspruchs 1.

### Stand der Technik:

**Die** US 2005/0150211 A1 **beschreibt eine glockenförmige Brennerdüse mit entsprechender Kraftstoffleitung und Zündern zum Erhitzen eines Abgasstroms.**

**Die** DE 42 03 807 A1 **beschreibt eine Vorrichtung zur katalytischen NOx-Reduktion in sauerstoffhaltigen Abgasen unter Anwendung von Harnstoff, mit einem in einer Abgasleitung enthaltenen Reduktionskatalysator sowie einem Harnstoffbehälter, der mittels einer Zufuhreinrichtung mit dem Abgassystem verbunden ist, wobei die Zufuhreinrichtung eine Sprühdüse aufweist, mit der flüssige Harnstofflösung auf einen Verdampfer fein versprüht werden kann. Gemäß einer Ausgestaltung der Erfindung ist der Verdampfer mit dünnen, nicht geradlinigen Kanälen ausgestattet, die über Schlitze oder kleine öffnungen untereinander in strömungstechnischer Verbindung steht Durch diese Ausbildung wird der aus der Düse kommende Harnstoff-Lösungsnebel in eine Vielzahl von Strömungsfäden aufgeteilt, die innerhalb des Verdampfers umgelenkt, teilsweise zusammengeführt und wieder getrennt werden.**

Moderne Nachbehandlungsverfahren für die Abgase von Dieselmotoren verlangen die Zugabe von Zusatzstoffen zum Abgas, um die betreffenden chemischen Reaktionen mit optimaler Wirkung durchführen zu können. So muss zur Verbesserung und Aufrechterhaltung der selektiven katalytischen Reduktion beim sogenannten SCR- Verfahren in einem dahinter geschalteten SCR-Katalysator dem Abgas Ammoniak zugegeben werden, meist in Form einer wässrigen Harnstofflösung. Zur Verbesserung und Aufrechterhaltung der katalytischen Funktion eines Dieseloxidationskatalysators werden den Abgasen Kohlenwasserstoffe zugemischt. Kohlenwasserstoffe werden den Abgasen auch zugegeben, wenn es darum geht, die Regeneration eines beladenen Dieselrusspartikelfilters einzuleiten.

In vielen der genannten Fällen werden die Zusatzstoffe in den Abgasstrom feinst verteilt eingedüst. Hinter der Düse folgt dann eine sogenannte Mischstrecke, in der sich die Abgase und der Zusatzstoff möglichst homogen vermischen sollen. Insbesondere bei der Verwendung einer wässrigen Harnstofflösung als Zusatzstoff muss diese Mischstrecke lang ausfallen, damit dem Wasser ausreichend Zeit verbleibt, komplett zu verdampfen.

Des Weiteren muss sichergestellt werden, dass der Zusatzstoff bis zu seiner vollständigen Verdampfung nicht mit der Rohrwand in Berührung kommt. Da die Rohrwand meist kälter ist als das Abgas selbst, würde der Zusatzstoff sich dort niederschlagen. Dadurch wird das Rohr möglicherweise angegriffen; insbesondere aber fehlt die entsprechende Menge Zusatzstoff bei der Abgasnachbehandlungsreaktion, die dann nur noch unvollständig abläuft. Das ist unbefriedigend.

Selbstverständlich hat sich die Fachwelt bemüht, diesen Nachteilen abzuhelfen. Insbesondere wurde vorgeschlagen, statische Mischelemente in Form von angestellten Flügeln, Blechen und dergleichen in die Mischstrecke einzubauen, um durch eine Verwirbelung des Gemisches aus Abgas und Zusatzstoff eine innige Durchmischung der beiden auch bei einer kurzen Mischstrecke zu erreichen. Leider haben diese bekannten Lösungsvorschläge hohe Kosten und vor allem hohe Gegendrücke zur Folge. Es besteht daher weiterhin ein erheblicher Bedarf nach technischen Lösungen, die die Nachteile des Standes der Technik beheben.

### Darstellung der Erfindung:

Der vorliegenden Erfindung liegt die Aufgabe zugrunde, eine Vorrichtung zum Nachbehandeln der Abgase von Dieselmotoren anzugeben, die in der Lage ist, auch bei kurzer Mischstrecke eine völlige Verdampfung von Zusatzstoffen und eine möglichst homogene Durchmischung von Abgas und Zusatzstoffen zu erreichen sowie eine Abscheidung von Zusatzstoffen an der Rohrinnenwand der Mischstrecke zu vermeiden.

Diese Aufgabe wird gelöst durch eine Vorrichtung mit den Merkmalen des Anspruchs 1.

Wesentlicher Vorteil der vorliegenden Erfindung ist, dass die Abgase über die am Umfang des Rohrmantels des Mischrohrs verteilten Perforationen von allen Seiten gleichzeitig in das Mischrohr eintreten, wodurch die durch das Mischrohr strömenden Abgase im Zentrum des Mischrohrs konzentriert werden. Zusammen mit dem eingedüsten Zusatzstoff verlassen die im Zentrum konzentrierten Abgase das Mischrohr und strömen anschließend durch die Mischstrecke, wobei die zentrumsnahe Konzentration aufrechterhalten bleibt, so dass sich Zusatzstoffe nicht an der Wand der Mischstrecke niederschlagen.

Gemäß einer Ausgestaltung der Erfindung liegt die Aufweitung des Mischrohrs über den gesamten Umfang dicht am Abgas führenden Rohr an und der kegelmantelförmige Teil der Aufweitung ist mit großflächigen Perforationen versehen. Da diese Perforationen aufgrund ihrer Positionierung im Bereich der Wand der nachfolgenden Mischstrecke liegen, bildet der Teil der Abgase, der durch diese Perforationen strömt, eine wandnahe Strömung aus, die zusätzlich verhindert, dass Zusatzstoffe aus dem im Zentrum der Mischstrecke strömenden Gemisch von Abgas und Zusatzstoff an die Wandung der Mischstrecke gelangen können.

Gemäß einer Ausgestaltung der Erfindung ist das Abgas führende Rohr ein Bogen, vorzugsweise ein 90°-Bogen.

Gemäß einer vorteilhaften Weiterbildung der Erfindung sind die Perforationen des Mischrohrs ungleichmäßig verteilt. Durch geschickte Verteilung dieser Perforationen ist es möglich, die Menge der Abgase, die über den Umfang des Mischrohrs verteilt in dieses einströmen, gezielt zu steuern, so dass sich auch bei ungünstigen äußeren Strömungsverhältnissen, wie man sie bei einem engen 90°-Bogen beispielsweise erwarten muss, stets die gewünschte Zentrierung des Gemisches aus Abgas und Zusatzstoff einstellen lässt.

### Kurze Beschreibung der Zeichnungen:

Anhand der Zeichnung soll die Erfindung in Form eines Ausführungsbeispiels näher erläutert werden. Es zeigen:
- Fig. 1: eine isometrische Darstellung eines Mischrohrs,
- Fig. 2: das Mischrohr der Fig. 1, eingebaut in einen 90°-Rohrbogen,
- Fig. 3: in isometrischer Darstellung eine Verteilung des Gemischs aus Abgas und Zusatzstoff in einer Mischstrecke, und
- Fig. 4: eine vereinfachte Darstellung der Abgasströmungen aus dem Abgas führenden Rohr in das Mischrohr.

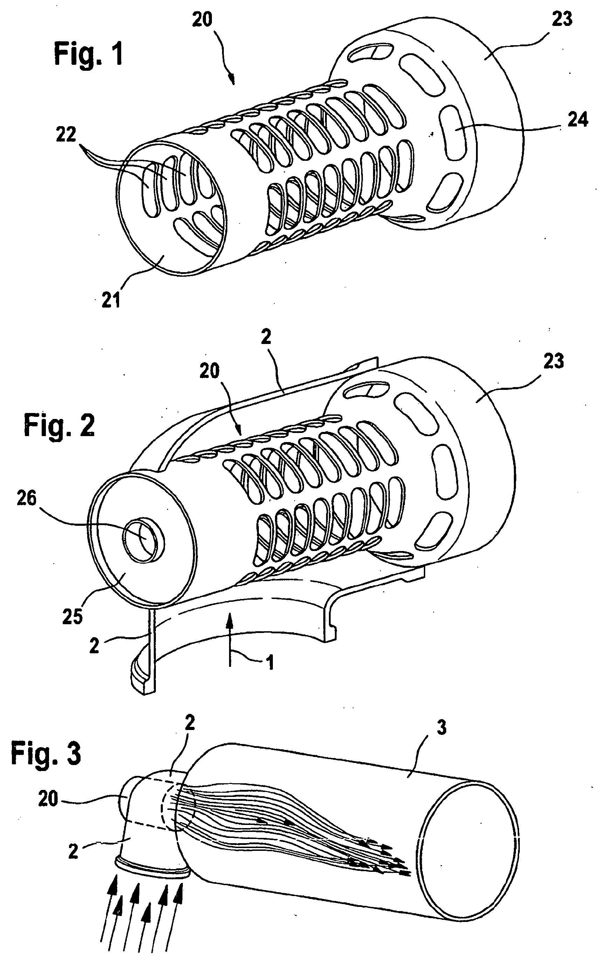

Fig. 1 zeigt eine isometrische Darstellung eines Mischrohrs 20. Das Mischrohr 20 ist an einem Ende 21 offen, am anderen Ende befindet sich eine kegel- oder glockenförmige Aufweitung 23. Der Rohrmantel ist mit großflächigen Perforationen 22 versehen. Ein weiterer Kreis von Perforationen 24 befindet sich im kegelmantelförmigen Teil der Aufweitung 23.

Fig. 2 zeigt das Mischrohr 20 eingesetzt in ein Abgas, dargestellt durch einen Pfeil 1, führendes Rohr 2, hier in Form eines 90°-Rohrbogens. Das offene Ende 21 des Mischrohrs 20 ist mit einem Verschlussdeckel 25 verschlossen, der eine Aufnahme 26 für eine Düse (nicht dargestellt) hat, die einen Zusatzstoff in das Mischrohr 20 bzw. die Abgase 1 eindüst. Je nach Bedarf kann die Düse eine wässrige Harnstofflösung, Kohlenwasserstoffe oder andere Zusatzstoffe in das Abgas 1 eindüsen.

Wie Fig. 2 ferner erkennen lässt, ist die Aufweitung 23 am Ende des Mischrohrs so dimensioniert, dass sie an der Innenseite des Abgas führenden Rohrs 2 dicht anliegt. Auf diese Weise muss das in das Rohr einströmende Abgas 1 durch die Perforationen 22, 24 strömen. Der in die Perforationen 22 im Rohrmantel einströmende Teil der Abgase führt zu einer Konzentrierung der Abgasströmung im Zentrum des Mischrohrs 20 und der sich daran anschließenden Mischstrecke 3 (Fig. 3). Der durch die Perforationen 24 strömende Teil der Abgase dagegen bildet in der nachfolgenden Mischstrecke 3 eine Mantelströmung aus, die das Gemisch aus Abgas und Zusatzstoff wirksam vor einer Wandberührung schützt.

Fig. 3 zeigt die aus einer Simulation gewonnene Darstellung der Strömungsfäden des Gemisches aus Abgas und Zusatzstoff durch das Mischrohr 20 und die nachfolgende Mischstrecke 3. Die Strömungsfäden bilden eine schraubenlinienförmige Verwirbelung aus, erreichen jedoch die Wand der Mischstrecke 3 nicht, so dass es nicht zu einer Wandabscheidung kommt.

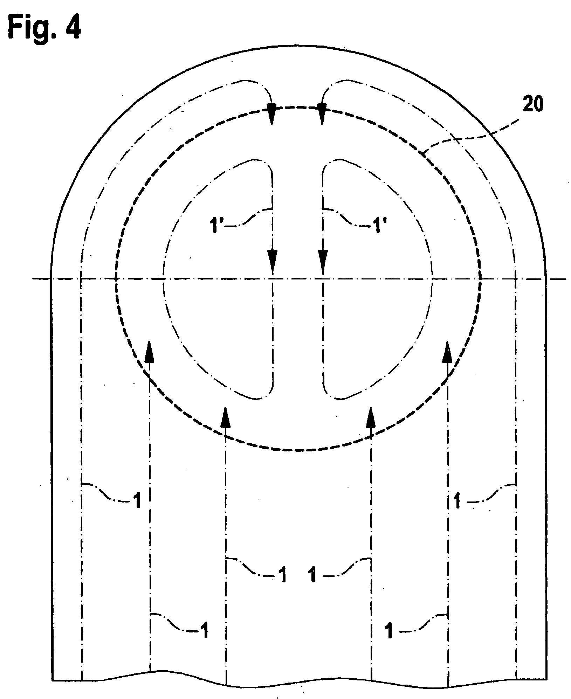

Fig. 4 zeigt rein schematisch einen Querschnitt durch das Abgas führende Rohr 2 und das Mischrohr 20 bei vereinfachter Darstellung der Abgasströmung 1. Man erkennt, dass aufgrund der symmetrischen Umströmung des Mischrohrs 20 sich im Inneren des Mischrohrs 20 ein Doppelwirbel 1' ausbildet, der einerseits für die homogene Durchmischung von Abgas und Zusatzstoff und andererseits für die Konzentration des Gemisches aus Abgas und Zusatzstoff im Zentrum des Mischrohrs 20 und der nachfolgenden Mischstrecke 3 sorgt.

## Patentansprüche

1. Vorrichtung zum **Eindüsen von Harnstoff in** Abgase (1) von Dieselmotoren, umfassend
ein von den Abgasen (1) durchströmtes Rohr (2),
eine **Harnstoff-Düse** zum Eindüsen **von Harnstoff** in das Rohr (2) bzw. in die Abgase (1),
- eine der **Harnstoff-Düse** nachgeordnete Mischstrecke (3),
- und ein mit Anschluss an die **Harnstoff-Düse** in das Rohr (2) mit radialem Abstand zum Rohr (2)eingesetztes Mischrohr (20),
- das Mischrohr (20) besitzt an einem Ende eine kegelmantel- oder glockenförmige Aufweitung (23), die wenigstens bereichsweise an dem Rohr (2) anliegt und mit einem Kreis von großflächigen Perforationen (24) versehen ist,
- das Mischrohr (20)
ist zylindrisch,
besitzt einen mit großflächigen Perforationen (22) versehenen Rohrmantel,
besitzt an seinem **einen** Ende die kegelmantel- oder glockenförmige Aufweitung (23), die an dem Rohr (2) wenigstens bereichsweise anliegt,
**gekennzeichnet durch die Merkmale:**
**das Mischrohr (20)** besitzt an seinem **anderen** Ende einen Verschlussdeckel (25) mit einer Aufnahme (26) **an der** die **Harnstoff**-Düse **angeordnet ist** und
**das Rohr (2) bildet einen Bogen, in den das Mischrohr (20) eingesetzt ist.**

2. Vorrichtung nach Anspruch 1, **gekennzeichnet durch** das Merkmal: die Aufweitung (23) liegt über den gesamten Umfang dicht am Rohr (2) an.

3. Vorrichtung nach Anspruch 1 oder 2 **gekennzeichnet durch** das Merkmal: das Rohr (2) ist ein **90°**-Bogen.

4. Vorrichtung nach einem der Ansprüche 1 bis 3, **gekennzeichnet durch** das Merkmal: die Perforationen (22, 24) des Mischrohrs (20) sind ungleichmäßig verteilt.

## Claims

1. A device for nozzling urea into exhaust gases (1) of diesel engines, comprising a tube (2) through which the exhaust gases (1) flow,
an urea nozzle for nozzling urea into the tube (2)/into the exhaust gases (1),
- a mixing section (3) arranged downstream of the urea nozzle
- and a mixing tube (20) inserted in the tube (2) and connected to the urea nozzle and radially spaced apart from the tube (2),
- the mixing tube (20) has at one of its ends a socket (23) having the shape of an envelope of a cone or of a bell, said socket (23) adjoining the tube (2) at least in sections and being provided with a circle of large-area perforations (24),
- the mixing tube (20)
is cylindrical
has a curved tube surface provided with large-area perforations (22),
has at one of its ends the socket (23) having the shape of an envelope of a cone or of a bell, said socket (23) adjoining the tube (2) at least in sections,
**characterized by** the features:
the mixing tube (20) has at the other end thereof a covering cap (25) with a retainer (26) where the urea nozzle is arranged, and
the tube (2) forms an arch in which the mixing tube (20) is inserted.

2. The device according to Claim 1, **characterized by** the feature: the socket (23) fits closely to the tube (2) over the entire circumference.

3. The device according to Claim 1 or 2, **characterized by** the feature: the tube (2) is an arch of 90°.

4. The device according to any one of Claims 1 to 3, **characterized by** the feature: the perforations (22, 24) of the mixing tube (20) are irregularly distributed.

## Revendications

1. Dispositif destiné à injecter de l'urée dans les gaz d'échappement (1) de moteurs diesel, comprenant
un tube (2) parcouru par les gaz d'échappement (1),
un injecteur d'urée pour l'injection d'urée dans le tube (2) ou respectivement dans les gaz d'échappement (1),
- un tronçon de mélange (3) disposé en aval de l'injecteur d'urée,
- et un tube de mélange (20) introduit dans le tube (2) avec un écart radial au tube (2), à la suite de l'injecteur d'urée,
- le tube de mélange (20) possède à une extrémité un évasement (23) en forme d'enveloppe conique ou de cloche qui est adjacent au moins partiellement au tube (2) et qui est muni d'un cercle de perforations (24) de surface importante,
- le tube de mélange (20)
est cylindrique,
possède une enveloppe tubulaire munie de perforations (22) de surface importante,
possède à une extrémité l'évasement (23) en forme d'enveloppe conique ou de cloche qui est adjacent au tube (2) au moins par zones,
**caractérisé par** les caractéristiques suivantes :
le tube de mélange (20) possède à son autre extrémité un couvercle de fermeture (25) avec un logement (26) sur lequel est disposé l'injecteur d'urée et
le tube (2) forme un coude dans lequel le tube de mélange (20) est introduit.

2. Dispositif selon la revendication 1, **caractérisé par** la caractéristique suivante: l'évasement (23) est situé de façon très rapprochée du tube (2) sur toute la périphérie.

3. Dispositif selon la revendication 1 ou 2, **caractérisé par** la caractéristique suivante : le tube (2) est un coude de 90°.

4. Dispositif selon l'une des revendications 1 à 3, **caractérisé par** la caractéristique suivante : les perforations (22, 24) du tube de mélange (20) sont réparties de façon non uniforme.
